# EUROPEAN PATENT SPECIFICATION

(11) **EP 3 123 910 B1**
(45) Date of publication and mention of the grant of the patent: **19.09.2018**
(21) Application number: 15199283.1
(22) Date of filing: 10.12.2015
(51) Int. Cl.: A47J 37/04

(54) **BAKING WORKING METHOD OF ELECTRIC OVEN**
BACKARBEITSVERFAHREN FÜR ELEKTROHERD
PROCÉDÉ DE TRAVAIL DE CUISSON DE FOUR ÉLECTRIQUE

(30) Priority: 28.07.2015 CN 201510454404
(43) Date of publication of application: 01.02.2017
(73) Proprietor: Staba Electric Co., Ltd., Zhongshan Guangdong 528425 (CN)
(72) Inventor: DENG, Yuhua, 528425 Zhongshan Guangdong (CN)
(74) Representative: Patentanwaltskanzlei WILHELM & BECK

(56) References cited:
- WO-A2-2007/022507
- US-A- 4 615 405
- US-A1- 2014 041 530

## Description

### FIELD OF THE INVENTION

The present invention relates to an oven control system, in particular to a baking working method of an electric oven.

### BACKGROUND OF THE INVENTION

Generally when the users roast large meat food such as a whole chicken or a whole duck, an electric oven equipped with barbecue fork is used. The barbecue fork is put on an electric motor of the oven, and the food is cooked by simulating the action of charcoal fire barbecuing rotation. The user only needs to set some key parameters, such as the type and weight of the food, and time, after that the whole process of food cooking can be automatically completed by the oven. However, the operation for the user may be troublesome to a certain extent if too many parameters are to set, so that a high-grade product may be provided a pressure sensor in an inner container to weigh the food, the user only needs to select the type of the food, and the machine can automatically complete food cooking.

However, if the pressure sensor is mounted on the barbecue fork, the requirement for production technology is high, and the production capacity is indirectly influenced. Secondly, the cost increase of the pressure sensor will be transferred to the end user along with the product finally, so that the market competitiveness of the product is reduced. Finally, if the mode of operation is just rotation, the case that the food is partially burned or partially uncooked may occurs.

US 2014/041530 A1, US 4 615 405 A and WO2007/022507 A discloses prior art.

### SUMMARY OF THE INVENTION

In order to solve the above technical problems, the present invention aims to provide a baking working method of an electric oven, which calculates food weight through time.

The technical solution adopted by the present invention is as follows.

A baking working method of an electric oven, applied to an oven for driving a barbecue fork rotating shaft to rotate food to be baked by a motor, comprising the following steps: S1, measuring the period T₀ when a barbecue fork is unloaded; S2, fixing the food onto the barbecue fork, and measuring the period T₁ when the barbecue fork is loaded; S3, calculating the weight M₁ of the food on the barbecue fork, *M*₁ *=* (*T*₁ /*T*₀)² ** M*₀*,* wherein M₀ is the default weight when the barbecue fork is unloaded; and S4, setting the baking time and/or temperature according to the food weight M1 in the step S4, when the weight M₁ is large, the baking time is increased, and the rotation slows down; and when the weight M₁ is small, the baking time is reduced, and the rotation speeds up; and/or in the step S4, when the weight M1 is large, the baking temperature is increased, and the rotation slows down; and when the weight M₁ is small, the baking temperature is reduced, and the rotation speeds up.

Further, the measurement of T₀ and T₁ is realized through the following method: a grille rotary plate, which synchronously rotates with the barbecue fork rotating shaft, and is installed on the barbecue fork rotating shaft; an infrared transmitting and receiving device is installed on the outside of the grille rotary plate, which comprises a transmitter and a receiver, a signal is transmitted by the transmitter from one side of the rotary plate and received by the receiver on the other side of the rotary plate when passing through the grilles, and the interval of the receiver receiving the signal twice is the rotation period of the barbecue fork.

The present invention has the following beneficial effects:
According to the invention, the weight of loaded food is calculated by detecting the periods when the barbecue fork rotating shaft is unloaded and loaded, and the weighing of the food is realized while the mounting is simple, so that the baking time and temperature are reasonably set, the electric oven is preferably self-adaptive to food with different weights, and automatic cooking of the food is realized.

### BRIEF DESCRIPTION OF THE DRAWINGS

The specific embodiments of the present invention are further described with reference to the following accompanying drawings.
FIG. 1 is a diagrammatic drawing of an electric oven provided with a grille rotary plate and an infrared transmitting and receiving device according to the present invention;
FIG. 2 is a diagrammatic drawing of the grille rotary plate;
FIG. 3 is a diagrammatic drawing of the infrared transmitting and receiving device;
FIG. 4 is a drawing of a comparison circuit for calculating rotation period;
FIG. 5 is a drawing of a waveform generated when a barbecue fork is unloaded;
FIG. 6 is a drawing of a waveform generated when the barbecue fork is loaded.

### DESCRIPTION OF EMBODIMENTS

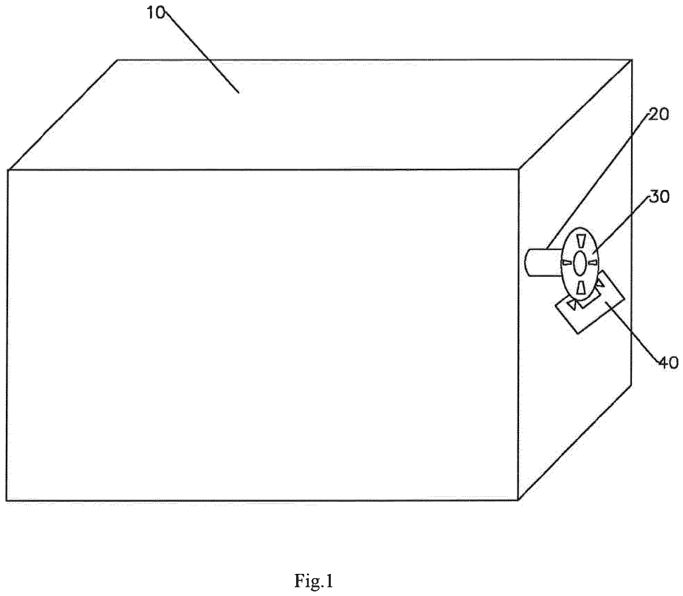

As shown in FIG. 1 to FIG. 3, in order to implement the detection of food weight for an oven 10 according to the present invention, a rotary plate 30, which synchronously rotates with a barbecue fork rotating shaft 20 and is provided with grilles 301, is installed on the barbecue fork rotating shaft 20, an infrared transmitting and receiving device 40 is installed on the outside of the rotary plate 30, the infrared transmitting and receiving device 40 comprises a transmitter 401 and a receiver 402, a signal is transmitted by the transmitter 401 from one side of the rotary plate 30 and received by the receiver 402 on the other side of the rotary plate 30 when passing through the grilles 301, and the interval of receiving the signal twice in succession by the receiver 402 is the rotation period of a barbecue fork.

The baking working method according to the present invention comprises the following steps:
S1, measuring the period T₀ when the barbecue fork is unloaded;
S2, fixing the food onto the barbecue fork, and measuring the period T₁ when the barbecue fork is loaded;
S3, calculating the weight M₁ of the food on the barbecue fork, *M*₁ = (*T*₁ / *T*₀)² ** M*₀*,* wherein M0 is the default weight when the barbecue fork is unloaded;
S4, setting the baking time and/or temperature according to the food weight M₁. In the step S4, when the weight M₁ is large, the baking time is increased, and the rotation slows down; and when the weight M₁ is small, the baking time is reduced, and the rotation speeds up. In the step S4, when the weight M₁ is large, the baking temperature is increased, and the rotation slows down; and when the weight M₁ is small, the baking temperature is reduced, and the rotation speeds up.

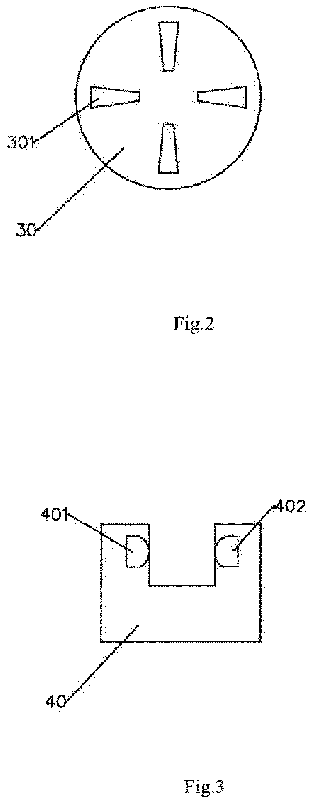

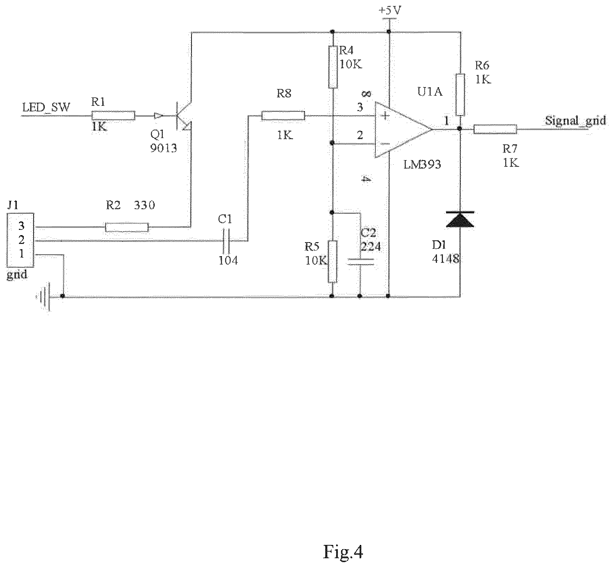

As shown in FIG. 4, J1 is a receiver port in FIG. 3, wherein J1-1 is GND (Grounded), J1-2 is an infrared receiving signal, J1-3 is 5V power supply for control, LED SW is a single chip microcomputer controlled emitting switch to prevent from causing LED aging due to long-time switching-on, SIGNAL_GRID is a device signal source to access a single chip microcomputer for signal acquisition.

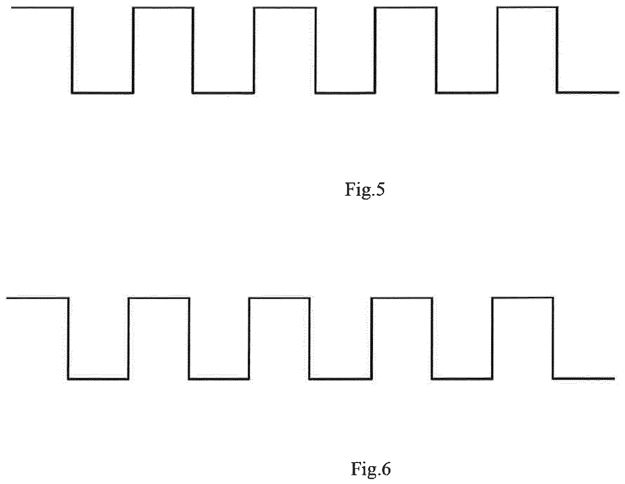

As shown in FIG. 5 and FIG. 6, the waveform period generated when the barbecue fork is unloaded is different from that when the barbecue fork is loaded. The period obtained in FIG. 5 is T₀, and the period obtained in FIG. 6 is T₁.

As the diameter of the rotary plate in FIG. 2 is definite in size, the circumference is definite and is denoted by S. Suppose that the rotation of the whole circumference is a uniform acceleration process, the distance *S* = 0.5 * *a * t²,* then the accelerated speed a = *2S* / *t₂,* and the traction force *F* = *M**a.

Under the condition that the traction force of the motor is constant, the equation that *M*₀ * *2S* / *T*₀*² = M*₁ ** 2S* / *T*₁² is obtained, and finally the equation that M₁ = (*T*₁² / *T*₀*²*) ** M*₀ is obtained, wherein M₀ is the default weight when the barbecue fork is unloaded and can be regard as gross weight, T₀ is the rotation period when the barbecue fork rotating shaft is unloaded, T₁ is the rotation period when the barbecue fork rotating shaft is loaded, and M₁ is the food weight obtained through calculation.

Therefore, as long as the SINGAL_GRID signal is on an interrupt interface outside an MCU (Microprogrammed Control Unit), the weight change of the food can be obtained in combination with the periodic change obtained by a timer. And then, the weight of the food on the barbecue fork is obtained. It is indicated that the slower the rotation is, the heavier the food on the barbecue fork rotating shaft is; and the faster the rotation is, the lighter the food on the barbecue fork rotating shaft is.

The above mentioned is just the preferable embodiments of the present invention, but the present invention is not limited to the above embodiments, and the technical solution for realizing the purpose of the present invention in basically same means belongs to the scope of protection in the present invention.

## Claims

1. A baking working method of an electric oven (10), applied to the oven for driving a barbecue fork rotating shaft (20) to rotate food to be baked by a motor, **characterized by** comprising the following steps: S1, measuring the period T₀ when a barbecue fork is unloaded; S2, fixing the food onto the barbecue fork, and measuring the period T₁ when the barbecue fork is loaded; S3, calculating the weight M₁ of the food on the barbecue fork, M₁ = (*T*₁ / *T*₀)² ** M*₀*,* wherein M₀ is the default weight when the barbecue fork is unloaded; and S4, setting the baking time and/or temperature according to the food weight M₁, wherein, in the step S4, when the weight M₁ is large, the baking time and /or baking temperature is increased, and the rotation slows down; and when the weight M₁ is small, the baking time and /or baking temperature is reduced, and the rotation speeds up.

2. The baking working method of an electric oven according to claim 1, **characterized in that** the measurement of T₀ and T₁ is realized through the following method: a grille rotary plate, which synchronously rotates with the barbecue fork rotating shaft, and is installed on the barbecue fork rotating shaft; an infrared transmitting and receiving device is installed on the outside of the grille rotary plate, which comprises a transmitter and a receiver, a signal is transmitted by the transmitter from one side of the rotary plate and received by the receiver on the other side of the rotary plate when passing through the grilles, and the interval of the receiver receiving the signal twice is the rotation period of the barbecue fork.

## Patentansprüche

1. Backarbeitsverfahren für einen elektrischen Ofen (10), das auf den Ofen zum Antreiben einer Grillspießrotationswelle (20) angewandt wird, um zu backende Lebensmittel durch einen Motor zu drehen, **dadurch gekennzeichnet, dass** es die folgenden Schritte umfasst: S1, Messen der Periode T₀, wenn ein Grillspieß entladen wird; S2, Befestigen der Lebensmittel auf dem Grillspieß und Messen der Periode T₁, wenn der Grillspieß beladen wird; S3, Berechnen des Gewichts M₁ der Lebensmittel auf dem Grillspieß, M₁ = (T₁ / T₀) 2*M₀, wobei M₀ das Standardgewicht ist, wenn der Grillspieß nicht beladen ist; und S4, Einstellen der Backzeit und/oder -temperatur gemäß dem Lebensmittelgewicht M₁, wobei in dem Schritt S4, wenn das Gewicht M₁ groß ist, die Backzeit und/oder Backtemperatur erhöht wird und die Rotation verlangsamt wird; und, wenn das Gewicht M₁ klein ist, die Backzeit und/oder Backtemperatur reduziert wird und die Rotation beschleunigt wird.

2. Backarbeitsverfahren für einen elektrischen Ofen nach Anspruch 1, **dadurch gekennzeichnet, dass** die Messung von T₀ und T₁ durch das folgende Verfahren realisiert wird: eine Schlitzrotationsplatte, die sich synchron mit der Grillspießrotationswelle dreht und auf der Grillspießrotationswelle installiert ist; eine Infrarot-Übertragung-und-Empfang-Vorrichtung auf der Außenseite der Schlitzrotationplatte installiert ist, welche einen Sender und einen Empfänger umfasst, ein Signal durch den Sender von einer Seite der Rotationsplatte übertragen wird und durch den Empfänger auf der anderen Seite der Rotationsplatte empfangen wird, wenn es durch die Schlitze hindurchgeht, und das Intervall des zweimaligen Empfangens des Signals durch den Empfänger die Rotationsperiode des Grillspießes ist.

## Revendications

1. Procédé de travail de cuisson d'un four électrique (10) appliqué au four pour entraîner, au moyen d'un moteur, un arbre (20) de rotation d'une broche de barbecue pour faire tourner des aliments à cuire, **caractérisé en ce qu'**il comprend les étapes suivantes : S1, mesurer la période T₀ pendant laquelle une broche de barbecue est déchargée ; S2, fixer les aliments sur la broche de barbecue, et mesurer la période T₁ pendant laquelle la broche de barbecue est chargée ; S3, calculer le poids M₁ des aliments sur la broche de barbecue, M₁ = (T₁ / T₀)² * M₀, M₀ étant le poids par défaut lorsque la broche de barbecue est déchargée ; et S4, régler le temps de cuisson et/ou la température en fonction du poids des aliments M₁, le temps de cuisson et/ou la température de cuisson étant augmentés à l'étape S4, lorsque le poids M₁ est élevé, et la vitesse de rotation diminuant ; et lorsque le poids M₁ est faible, le temps de cuisson et/ou la température de cuisson étant réduits et la vitesse de rotation augmentant.

2. Procédé de travail de cuisson d'un four électrique selon la revendication 1, **caractérisé en ce que** la mesure de T₀ et T₁ est réalisée par le procédé suivant : une plaque rotative de grille tourne de manière synchronisée avec l'arbre de rotation de la broche de barbecue et est installée sur l'arbre de rotation de la broche de barbecue ; un dispositif d'émission et de réception de rayons infrarouges est installé à l'extérieur de la plaque rotative de grille, et comprend un émetteur et un récepteur, un signal est transmis par l'émetteur depuis un côté de la plaque rotative et est reçu par le récepteur de l'autre côté de la plaque rotative lorsqu'il passe à travers les grilles, et l'intervalle entre deux réceptions du signal par le récepteur est la période de rotation de la broche de barbecue.
